# EUROPEAN PATENT APPLICATION

(11) **EP 4 799 972 A2**
(43) Date of publication of application: **02.09.2026**
(21) Application number: 24890927.7
(22) Date of filing: 12.11.2024
(51) Int. Cl.: B66F 9/075

(54) **FORKLIFT AND CONTROL METHOD FOR FORKLIFT**

(30) Priority: 13.11.2023 CN 202311509989
(71) Applicant: Effito Pte. Ltd., Singapore 048545 (SG)
(72) Inventor: LU, Wei, Singapore 048545 (SG); FANG, Mu, Singapore 048545 (SG); LU, Yujie, Singapore 048545 (SG); YANG, Bingchuan, Singapore 048545 (SG)
(74) Representative: Bandpay & Greuter
(86) International application number: PCT/IB2024/061221
(87) International publication number: WO 2025/104582

(57) **Abstract**

The present disclosure provides a forklift and a method of controlling a forklift. The forklift includes a forklift body, one or more fork arms, one or more load wheels, and a drive mechanism. Each fork arm is movably arranged on the forklift body. Each load wheel is rotatably arranged below a corresponding fork arm. The drive mechanism, arranged on the forklift body, is connected with the one or more fork arms and the one or more load wheels, respectively, and is configured to drive the load wheel to move away from the fork arm when driving the fork arm to ascend relative to the forklift body, to enable the load wheel to touch the ground, and drive the load wheel to move closer to the fork arm when driving the fork arm to descend relative to the forklift body.

## Description

### CROSS REFERENCE TO RELATED APPLICATIONS

The present application claims priority to Chinese Patent Application No. 202311509989.4 filed on November 13, 2023, the entire content of which is incorporated herein by reference.

### TECHNICAL FIELD

Embodiments of the present disclosure relates to the technical field of goods transportation, and in particular, to a forklift and a method of controlling a forklift.

### BACKGROUND

When a forklift is inserted into a pallet hole of a pallet, a load wheel at the bottom of the fork arm may rub against the pallet.

### SUMMARY

Embodiments of the present disclosure provides a forklift, including: a forklift body; one or more fork arms, each of the one or more fork arms is movably arranged on the forklift body; one or more load wheels, each of the one or more load wheels is rotatably arranged below a corresponding fork arm among the one or more fork arms; and a drive mechanism, connected to the one or more fork arms and the one or more load wheels, respectively, and configured to: when driving the fork arm to ascend relative to the forklift body, drive the load wheel to move away from the fork arm, such that the load wheel touches a ground, and/or, when driving the fork arm to descend relative to the forklift body, drive the load wheel to move closer to the fork arm.

Embodiments of the present disclosure provides a method of controlling a forklift, applied to a forklift including a forklift body, one or more fork arms, and one or more load wheels, where each of the one or more fork arms is movably arranged on the forklift body, each of the one or more load wheels is rotatably arranged below a corresponding fork arm among the one or more fork arms, and the method includes: when driving the fork arm to ascend relative to the forklift body, synchronously driving the load wheel to move away from the fork arm to touch a ground; and/or, when driving the fork arm to descend relative to the forklift body, synchronously driving the load wheel to move away from the ground and move closer to the fork arm.

**In** the embodiments of the present disclosure, the drive mechanism of the forklift drives the fork arm to ascend or descend, and drives the load wheel to move away from or move closer to the fork arm at the same time. In a working process, when the forklift picks up a pallet, the drive mechanism drives the fork arm to descend, and further synchronously drives the load wheel to move away from the ground and move closer to the fork arm, such that the fork arm gets more space for movement when entering a pallet hole, and avoids friction with the pallet. When the forklift carries a pallet and goods, the drive mechanism drives the fork arm to ascend, and further synchronously drives the load wheel to move away from the fork arm to touch the ground, such that the load wheel provide support for the forklift body and the goods. With such arrangement, when the fork arm descends, the load wheel moves away from the ground and retracts into the fork arm, and when the fork arm ascends, the load wheel moves away from the fork arm and touches the ground, so as to achieve the action synchronization between the fork arm and the load wheel, reduce the time for the forklift entering the pallet, and lower the load wheel in time when carrying goods, thereby providing support for the forklift and the goods faster.

### BRIEF DESCRIPTION OF DRAWINGS

One or more embodiments are illustratively described by the corresponding figures in the accompanying drawings, and these illustrative descriptions do not constitute a limitation on the embodiments. Elements with the same reference numerals in the drawings are represented as similar elements, and unless otherwise specified, the figures in the drawings do not constitute a proportional limitation.
FIG. 1 is a first structural diagram of a forklift according to embodiments of the present disclosure.
FIG. 2 is a second structural diagram of a forklift according to embodiments of the present disclosure.
FIG. 3 is an enlarged view of part A in FIG. 2.
FIG. 4 is a third structural diagram of a forklift according to embodiments of the present disclosure.
FIG. 5A is a structural diagram of a fork mechanism and a transmission assembly according to embodiments of the present disclosure.
FIG. 5B is a structural diagram of a drive arm according to embodiments of the present disclosure.
FIG. 6 is an exploded view of a fork mechanism and a transmission assembly according to embodiments of the present disclosure.
FIG. 7 is a fourth structural diagram of a forklift according to embodiments of the present disclosure.
FIG. 8 is a fifth structural diagram of a forklift according to embodiments of the present disclosure.
FIG. 9 is a first structural diagram of a mounting rack and a load wheel according to embodiments of the present disclosure.
FIG. 10 is an enlarged view of part B in FIG. 2.
FIG. 11 is a structural diagram of a transmission arm according to embodiments of the present disclosure.
FIG. 12 is an enlarged view of part C in FIG. 1.
FIG. 13 is an enlarged view of part D in FIG. 8.
FIG. 14 is a second structural diagram of a mounting rack and a load wheel according to embodiments of the present disclosure.
FIG. 15 is a flowchart of a method of controlling a forklift according to embodiments of the present disclosure.

Reference numeral description:
100, forklift; 11, forklift body; 111, chute; 112, steering wheel; 113, balance wheel; 114, control button; 115, emergency stop button; 116, tri-color light; 117, clearance lamp; 118, control panel; 119, heat sink; 12, fork mechanism; 121, fork arm; 1211, first connecting end; 1212, picking end; 1214, housing; 12141, containing slot; 1215, support arm; 122, load wheel; 1221, differential wheel; 123, mounting part; 1231, mounting hole; 124, first obstacle avoidance sensor; 125, base; 126, first motor; 127, second motor; 13, drive mechanism; 131, mounting rack; 1311, swing end; 13111, fork part; 13112, platform; 1312, movable end; 1313, first hinge part; 13131, first hinge hole; 13132, first hinge shaft; 132, transmission assembly; 1321, drive arm; 13211, first connecting rod; 13212, threaded rod; 13213, second connecting rod; 13214, first hinge end; 13215, second hinge end; 1322, transmission arm; 13221, third hinge end; 13222, fixed end; 13223, second hinge part; 132231, second hinge shaft; 132232, second hinge hole; 133, power assembly; 1331, jacking device; 13311, cylinder; 13312, first movable shaft; 13313, second movable shaft; 1332, sliding frame; 13321, sliding wheel; 14, auxiliary support mechanism; 141, orientation wheel; 142, mounting table; 15, guide mechanism; 151, guide shaft, 152, guide shaft sleeve; 16, second obstacle avoidance sensor; 17, cantilever; 171, suspension end; 172, second connecting end; 18, upright column; 181, third connecting end; 182, fourth connecting end; 19, 3D laser radar.

### DETAILED DESCRIPTION

In order to facilitate understanding of the present disclosure, the present disclosure will be described in more detail below with reference to the accompanying drawings and specific embodiments. It should be noted that, when an element is expressed as "connected" to another element, it may be directly on the other element, or there may be one or several centered elements therebetween. The orientations or positional relationships indicated by the terms "up," "down," "left," "right," "upper end," "lower end," "top," and "bottom" used in the present specification are based on those shown in the drawings, and are only for the convenience and simplification of the description of the present disclosure, and do not indicate or imply that the referred device or element must have a specific orientation, be constructed and operate in a specific orientation, and therefore cannot be construed as limitations on the present disclosure. In addition, terms such as "first" and "second" are used for descriptive purposes only and are not to be construed as indicating or implying a relative importance.

Unless otherwise defined, all technical and scientific terms used in this specification have the same meanings as those commonly understood by those skilled in the art belonging to the technical field of the present disclosure. The terms used in examples of the present disclosure are intended to describe the particular embodiments only, and not to limit the present disclosure.

When a fork arm of a forklift is inserted into a pallet hole of a pallet, the load wheel at the bottom of the fork arm may rub against the pallet, which may lead to pallet damage and affect the service life of the pallet if the situation continues for a long time.

In the actual operation of forklifts, when the first power assembly controls the fork arm to extend into the pallet hole of the pallet, the second power assembly controls the load wheel to retract toward the bottom of the fork arm to avoid friction with the bottom of the pallet; when the first power assembly controls the fork arm to insert to a specified position, the second power assembly controls the load wheel to move away from the fork arm and make contact with the ground to assist in supporting the forklift. This scheme uses different power assemblies to drive the lifting and lowering of the fork arm and the movement of the load wheel, respectively. Due to a certain time difference between the lifting and lowering of the fork arm and the swinging of the load wheel, the synchronization between the fork arm and the load wheel is poor, such that the time cost for the fork arm entering the pallet increases and accordingly the design cost for the power system increases too.

Embodiments of the present disclosure provide a forklift, the type of which includes but is not limited to, a manual forklift, an electric forklift, and an automatic guided vehicle (AGV) forklift.

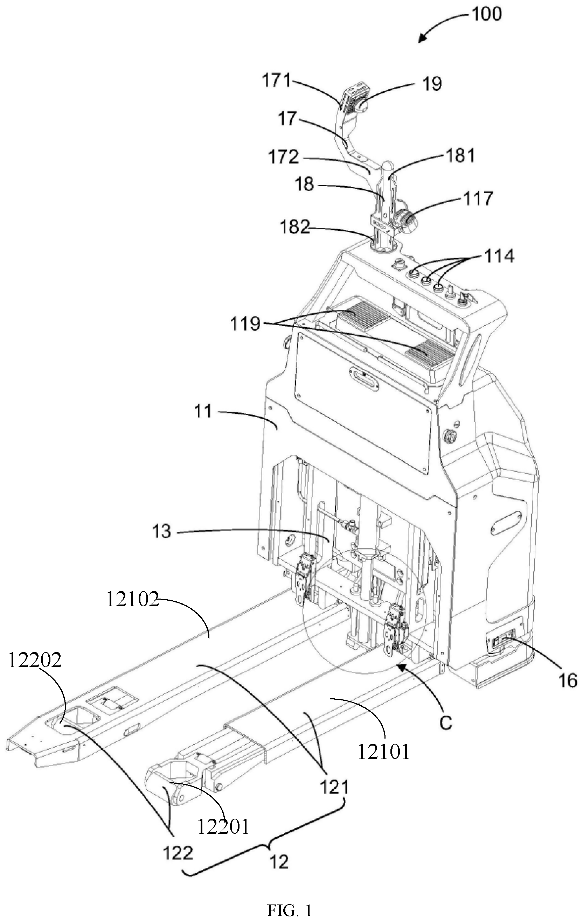

Referring to FIG. 1, a forklift 100 in an embodiment of the present disclosure includes a forklift body 11, one or more fork arms 121, one or more load wheels 122, and a drive mechanism 13. Each fork arm 121 is movably arranged on the forklift body 11. Each load wheel 122 is rotatably arranged below a corresponding fork arm 121. The drive mechanism 13 is connected to the fork arm 121 and the load wheel 122, respectively, and the drive mechanism 13 is configured to, when driving the fork arm 121 to ascend relative to the forklift body 11, synchronously drive the load wheel 122 to move away from the fork arm 121, such that the load wheel 122 touches the ground, and/or, when driving the fork arm 121 to descend relative to the forklift body 11, synchronously drive the load wheel 122 to move closer to the fork arm 121, such that the load wheel 122 moves away from the ground. In this embodiment, the drive mechanism13 is arranged on the forklift body 11.

The working principle of the forklift 100 in this embodiment is: the forklift 100 is provided with a drive mechanism13, the drive mechanism 13 drives the fork arm 121 to ascend or descend, and synchronously drives the load wheel 122 to move away from or move closer to the fork arm 121. In a working process, when the forklift 100 picks up a pallet, the drive mechanism 13 drives the fork arm 121 to descend, and further synchronously drives the load wheel 122 to moves away from the ground and move closer to the fork arm 121, such that the fork arm 121 gets more space for movement when entering a pallet hole and avoids friction with the pallet. When the forklift 100 carries a pallet and goods, the drive mechanism 13 drives the fork arm 121 to ascend, and further synchronously drives the load wheel 122 to move away from the fork arm 121 to touch the ground, such that the load wheel 122 provide support for the forklift body 11 and the goods.

It may be understood that, in this embodiment, a drive mechanism 13 is provided to drive the fork arm 121 and the load wheel 122, to move the load wheel 122 away from the fork arm 121 to touch the ground when the fork arm 121 ascends relative to the forklift body 11, and to move the load wheel 122 away from the ground and to retract the load wheel 122 into the fork arm 121 when the fork arm 121 descends relative to the forklift body 11, thus achieving action synchronization between the fork arm 121 and load wheel 122, reducing the time for the forklift 100 entering the pallet, and lowering the load wheel 122 in time when the fork arm 121 carries goods, so as to provide support for the forklift 100 and the goods faster.

In some embodiments, the forklift 100 includes a fork mechanism 12, the fork mechanism 12 includes one or more aforementioned fork arms 121 and one or more load wheels 122, a load wheel 122 is arranged below one or more fork arms 121. A single load wheel 122 may be arranged below one fork arm 121, or a plurality of load wheels 122 may form a wheel set arranged below a same fork arm 121, which is not limited here.

In the forklift 100 in this embodiment, the quantities of the fork arms 121 and the load wheels 122 are both two, the two fork arms 121 are arranged apart on the forklift body 11, the two load wheels 122 are respectively in one-to-one correspondence with the two fork arms 121, and the drive mechanism 13 is connected to each fork arm 121 and each load wheel 122 respectively, and the drive mechanism 13 can drive each fork arm 121 and each load wheel 122 to move synchronously.

It may be understood that, in this embodiment, paired fork arms 121 and paired load wheels 122 are provided, the fork arms 121 correspond to the load wheels 122 one-to-one, to reduce the components on the forklift 100 while providing good support for the pallet and goods, so as to enable the overall structure of the forklift 100 to be more lightweight. At the same time, the drive mechanism 13 can drive each fork arm 121 and each load wheel 122 to move synchronously, thus solving the problem of long handling times and high operational difficulty in picking up and placing pallets due to action delays between each fork arm 121 and load wheel 122.

In some embodiments, the mounting position of the load wheel 122 is adjustable relative to the fork arm 121 in a length direction of the fork arm 121. The forklift 100 in this embodiment, when picking up or carrying goods, extends the fork arm 121 into the pallet hole, and enables the load wheel 122 to be exposed outside the pallet hole, and the load wheel 122 moves away from the fork arm 121 to touch the ground when the fork arm 121 ascends.

It may be understood that, since different pallets are different in length, and the corresponding pallet holes are also different in length, the load wheel 122 in this embodiment may adjust the mounting position in the length direction of the fork arm 121, so as to adapt to more pallet specifications, which is conducive to improving the applicability of forklift 100. Secondly, the mounting position of the load wheel 122 may be adjusted on the fork arm 121, so as to overcome the mounting errors between the load wheel 122 and the fork arm 121.

In other embodiments, the fork arm 121 is moveable relative to the forklift body 11 in the width direction of the forklift body 11, and the load wheel 122 follows the movement of the fork arm 121, always staying below the fork arm 121. Further, the movement distance of each fork arm 121 is independent of each other.

It may be understood that, when the pallet is wider, the distance between the two fork arms 121 may be adjusted to better support the pallet and ensure the stability of the goods transmission, preventing the pallet and goods from deviating due to inertia during the transmission. Alternatively, when the pallet is placed in a narrow space, which is not conducive to the movement of the forklift 100, the picking up may be accomplished by moving the fork arms 121 into alignment with the pallet holes, and then the fork arms 121 are reset, thus enabling the forklift 100 suitable for more complex working conditions. In other words, the one or more fork arms 121 include a first fork arm 12101 and a second fork arm 12102, the first fork arm 12101 and the second fork arm 12102 are spaced apart and the distance between the two fork arms is adjustable; the one or more load wheels 122 include a first load wheel 12201 corresponding to the first fork arm 12101 and a second load wheel 12202 corresponding to the second fork arm 12101.

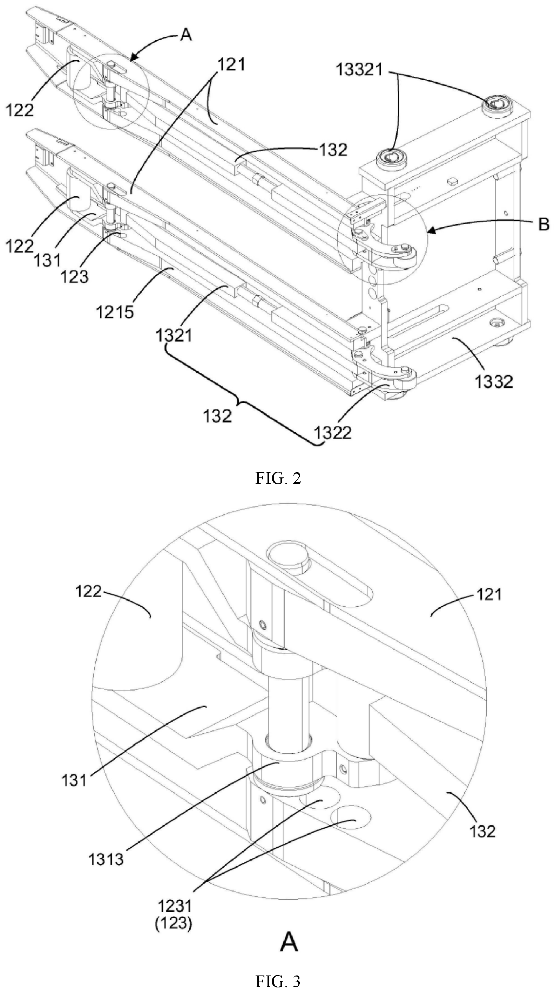

Referring to FIG. 2 and FIG. 3, in some embodiments, a plurality of mounting parts 123 are arranged along the length direction of the fork arm 121, and the load wheel 122 is fittingly connected to one of the plurality of mounting parts 123. The drive mechanism 13 includes a mounting rack 131, the load wheel 122 is mounted on the mounting rack 131, and is fittingly connected to the mounting part 123 through the mounting rack 131.

It may be understood that, since there are various types of pallets, different pallet specifications require adjusting the mounting position of the load wheel 122 to enable the fork arm 121 to insert into the pallet hole better and to enable load wheel 122 to support the goods on the fork arm 121 better. In this embodiment, the load wheel 122 is mounted on the mounting rack 131 and several mounting parts 123 are provided along the length direction of the fork arm 121. By selecting different mounting parts 123 to be fittingly connected to the load wheel 122, the mounting position of the load wheel 122 may be adjusted relative to the fork arm 121 in the length direction of the fork arm 121, thus enhancing the application range of the forklift 100.

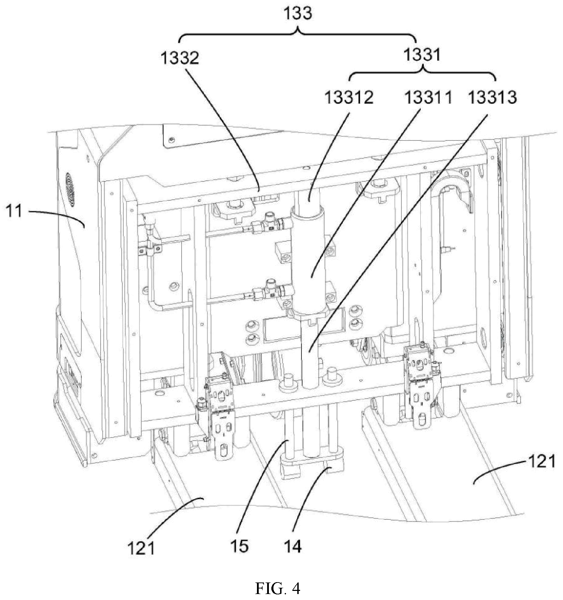

Referring to FIG. 2 and FIG. 4, in some embodiments, the drive mechanism 13 includes a transmission assembly 132 and a power assembly 133. A transmission assembly 132 is connected to the load wheel 122. The power assembly 133, arranged on the forklift body 11 and connected to the fork arm 121 and the transmission assembly 132, respectively, is configured to drive the fork arm 121 to move relative to the forklift body 11 in the height direction of the forklift body 11, and when the fork arm 121 ascends relative to the forklift body 11, drive the load wheel 122 to swing downward by driving the transmission assembly 132, such that the load wheel 122 moves away from the fork arm 121 until the load wheel touches the ground, and, when the fork arm 121 descends relative to the forklift body 11, drive the load wheel 122 to swing upward by driving the transmission assembly 132, such that the load wheel 122 moves close to the fork arm 121 and retracts into the fork arm 121.

It may be understood that, the power system in this embodiment adopts a single power assembly 133 to drive the fork arm 121 and the transmission assembly 132, and the power system drives the load wheel 122 through the transmission assembly 132, such that the load wheel 122 moves away from the ground and retracts into the fork arm 121 when the fork arm 121 descends, and the load wheel 122 moves away from the fork arm 121 and touches the ground when the fork arm 121 ascends, thus achieving action synchronization between the fork arm 121 and the load wheel 122 and reducing the time for the forklift 100 entering the pallet. In addition, in the forklift 100, since action synchronization between the fork arm 121 and the load wheel 122 may be achieved by adopting a single power assembly 133, it is beneficial to reduce the design cost of the forklift power system.

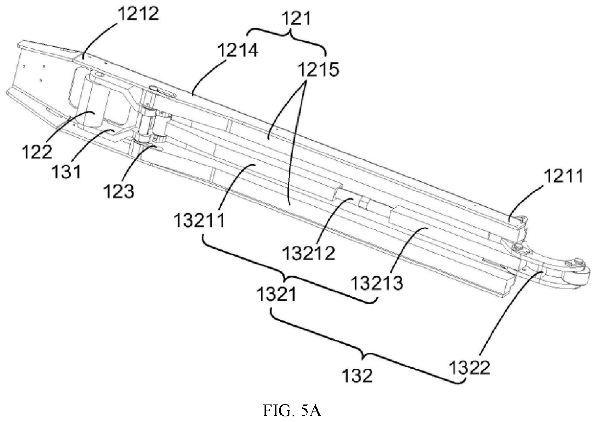

Continuing to refer to FIG. 4, in some embodiments, the power assembly 133 includes a sliding frame 1332 and a jacking device 1331. The sliding frame 1332 is connected to the forklift body 11, and is moveable relative to the forklift body 11 in the height direction of the forklift body 11. The jacking device 1331 is arranged on the forklift body 11 and connected to the sliding frame 1332. Referring to FIG. 5A at the same time, for example, the fork mechanism 12 includes paired fork arms 121 and paired load wheels 122, arranged apart respectively, the two fork arms 121 arranged side by side in the width direction of the forklift body 11, each fork arm 121 including a first connecting end 1211 and a picking end 1212, arranged at two opposite ends, the first connecting end 1211 is fixedly connected to the sliding frame 1332, a mounting rack 131 is provided below the picking end 1212, and a load wheel 122 is mounted on the mounting rack 131. There are two transmission assemblies 132, each transmission assembly 132 is mounted on a corresponding fork arm 121, one end of each transmission assembly 132 is hinged to the forklift body 11 and the sliding frame 1332, respectively, and the other end of the transmission assembly 132 is hinged to a corresponding mounting rack 131.

When the jacking device 1331 drives the sliding frame 1332 to ascend to drive the fork arm 121 to ascend, the sliding frame 1332 synchronously drives the two transmission assemblies 132, such that each transmission assembly 132 drives a corresponding load wheel 122 to move away from the fork arm 121 until the load wheel 122 touches the ground. When the jacking device 1331 drives the sliding frame 1332 to descend to drive the fork arm 121 to descend, the sliding frame 1332 drives the two transmission assemblies 132 at the same time, such that each transmission assembly 132 drives a corresponding load wheel 122 to approach the fork arm 121 and move closer to the fork arm 121.

In the working process of the forklift 100, the jacking device 1331 controls the lifting and lowering of the sliding frame 1332. The fork arm 121 of the fork mechanism 12 is fixedly connected to the sliding frame 1332, and the fork arm 121 follows the sliding frame 1332 to perform synchronous lifting or lowering actions. The transmission assembly 132 is connected to the sliding frame 1332 and the forklift body 11, respectively, and the load wheel 122 is connected to the transmission assembly 132 through the mounting rack 131. When the sliding frame 1332 descends, the transmission assembly 132 follows the sliding frame 1332 to descend and drives the load wheel 122 to approach the fork arm 121 and retracts into the fork arm 121, such that the fork arm 121 gets more space to move when entering the pallet hole, avoiding friction with the pallet. When the sliding frame 1332 ascends, the transmission assembly 132 follows the sliding frame 1332 to ascend and drives the load wheel 122 to move away from the fork arm 121, such that the load wheel 122 touches the ground and provides auxiliary support for the goods and the forklift 100.

It may be understood that, in this embodiment, the jacking device 1331, as a single power source, is adopted, by the jacking device 1331 driving the sliding frame 1332, the lifting and lowering of the fork arm 121 are implemented, and at the same time, the sliding frame 1332 drives the transmission assembly 132 to drive the mounting rack 131, so as to achieve action synchronization between the fork arm 121 and the load wheel 122, and reduce the time for the forklift 100 entering the pallet, which is beneficial to reduce the design costs of the forklift power system.

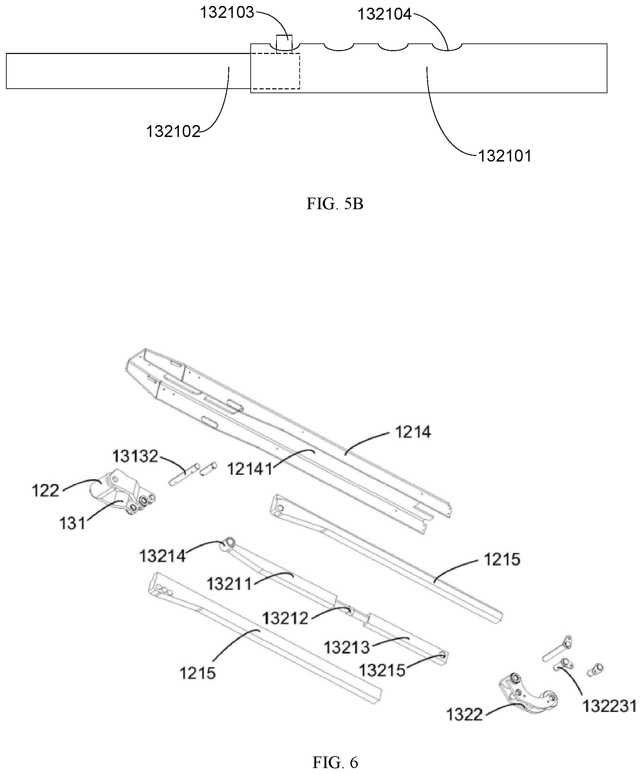

Referring to FIG. 5A and FIG. 6, in some embodiments, the fork arm 121 includes a housing 1214 and a support arm 1215, where the housing 1214 and the support arm 1215 are in the shape of a long strip. The housing 1214 is provided with a containing slot 12141 arranged along its length direction, and a support surface on the back of the containing slot 12141 and support surface is used for supporting the pallet. There are a pair of support arms 1215, and the support arms 1215 are parallel to the housing 1214, one support arm 1215 is independently mounted on a side wall of the containing slot 12141 in the length direction, and another support arm 1215 is independently mounted on another side wall of the containing slot 12141 in the length direction. The transmission assembly 132 is accommodated within the containing slot 12141 and is between the two support arms 1215. To facilitate the picking up of goods, the picking end 1212 of the fork arm 121 gradually narrows in width from a side close to the forklift body 11 to a side away from the forklift body 11. In some embodiments, the support arms 1215 may be fixedly connected to the housing 1214 in a manner of welding, riveting, or bolts and nuts, etc.

It may be understood that the fork arm 121 of this embodiment includes a housing 1214, and the housing 1214 provided with a containing slot 12141 to accommodate the transmission assembly 132 and the load wheel 122, which is beneficial for making the overall structure of the forklift more concise, and the space utilization rate higher. In addition, the support arms 1215 are mounted within the containing slot 12141 to support the entire housing 1214, thus increasing the overall strength of the fork arm 121. For example, several mounting parts 123 in this embodiment are all arranged on the support arms 1215, allowing the mounting rack 131 to, by connecting the support arm 1215, establish a reliable connection with the fork arm 121. The fork arm 121 in this embodiment accommodates the load wheel 122 and the transmission assembly 132 through the containing slot 12141, and is further used to protect the load wheel 122 and the transmission assembly 132, so as to avoid damage due to collision with obstacles during a travel of the forklift 100, especially avoid damage to the transmission assembly 132 accommodated between a pair of support arms 1215. Under the protection of the stronger support arms 1215, the load wheel 122 and the transmission assembly 132 have better collision protection.

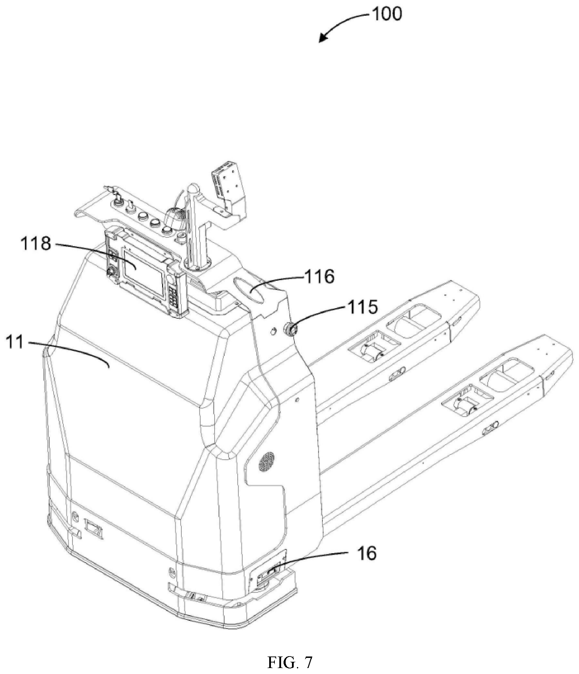

Continuing to refer to FIG. 1 and FIG. 7, in some embodiments, the forklift body 11 includes a control panel 118, several control buttons 114, and several sensors, etc. A controller is electrically connected to the control panel 118, the control buttons 114, the sensors, etc., respectively. The controller may turn on or turn off the corresponding functional module according to a control instruction of the control panel 118 or a trigger signal of the control button 114, e.g., controlling the drive mechanism 13 to perform an ascending or a descending action of the sliding frame 1332, or turning on or off the corresponding module according to a signal sent by a sensor, e.g., urgently driving the wheel set to stop moving when the sensor detects that the forklift 100 is approaching the edge of the dock. In other embodiments, the control panel 118 is provided with a touch screen, for the convenience of the operator to operate the control panel 118 and control the forklift 100.

The forklift body 11 is further mounted with an upper limit position detection switch and a lower limit position detection switch used for detecting the height of the fork arm 121. The upper limit position detection switch and the lower limit position detection switch are electrically connected to the controller. When the height of the fork arm 121 reaches the upper limit position, the upper limit position detection switch sends a corresponding trigger signal to the controller to stop the ascent of the fork arm 121; when the height of the fork arm 121 reaches the lower limit position, the lower limit position detection switch sends a corresponding trigger signal to the controller to stop the descent of the fork arm 121. For example, the upper limit position detection switch and the lower limit position detection switch may adopt photoelectric switches, etc.

Referring to FIG. 1 and FIG. 7, in some embodiments, the forklift body 11 may further be equipped with an emergency stop button 115, an audible and visual alarm device, a voice broadcaster, a tri-color light 116, a clearance lamp 117, a driving recorder, a barcode scanner, a heat sink119, etc. The audible and visual alarm device includes an alarm light and a speaker. When the forklift 100 encounters a fault, light alarm signals and sound alarm signals are sent through the alarm light and the speaker, respectively. The emergency stop button 115 is arranged on the shell of the forklift body 11, and the operator may also trigger the emergency stop button 115 to make the forklift stop working urgently. The clearance lamp 117 is configured to display the contour of the forklift 100 to attract others' attention to the overall forklift 100 and avoid collision with forklift 100, so as to play a role in safety protection. The clearance lamp 117 may be suspended above the forklift body 11 by a bracket.

Further, the operator may control the control panel 118 through remote control, to remotely control the forklift 100 to perform corresponding actions. In addition, a bracket for accommodating the control panel 118 may be arranged on the forklift body 11, and the control panel 118 may be placed on the bracket when the control panel 118 is not in use. The tri-color light 116 is arranged on the shell of the forklift body 11 and displays the target color under the control of the controller. For example, the tri-color light 116 is configured to indicate the current status of the forklift 100, e.g., a red light indicates a fault with the forklift 100, a yellow light indicates that the forklift 100 has stopped working, and a green light indicates normal operation of the forklift 100.

The driving recorder is configured to record the status, road conditions, and working process of the forklift 100 during its operation, and the recorded data is saved on a memory device, or the controller generates a working log based on the recorded content, as a basis for daily maintenance and fault troubleshooting of the forklift. To facilitate the recording of handling goods information, graphical codes with goods information may be pasted on the goods or the outer packaging of the goods. When the forklift picks up the goods, the graphical code is scanned by the barcode scanner to obtain the goods information, and the recorded information is saved in the memory, which is conducive to the management of goods handling.

The heat sink119 is configured to provide heat dissipation for the forklift 100. Since the drive mechanism 13 (jacking device 1331) and the power system of the forklift 100 are prone to generate a large amount of heat during operation, in order to ensure a good vehicle condition, in this embodiment, the top of the forklift body 11 is provided with a hollow area (hollow slot or hollow hole, etc.) for air outlet, the hollow area is connected to the internal hollow area and gaps of the forklift body 11, and the heat sink119 is mounted in the hollow area, airing out to the outside of the forklift body 11 through the hollow area. When the forklift 100 works, the heat sink 119 works, forming an air flow inside the forklift body 11, taking away the heat of the drive mechanism 13 and the power system through the air flow. At the same time, the hot air also tends to flow upwards, which is easier to flow out from the hollow area to the outside, thus achieving a good heat dissipation effect. In addition, in this embodiment, with the above arrangement, the heat sink 119, e.g., a cooling fan, is easily accommodated inside the forklift body 11, avoiding increasing the external volume of the forklift body 11, and the heat sink 119 is mounted in the hollow area on the top of the forklift body 11, which may effectively save mounting space, thereby improving the space utilization rate of the forklift 100.

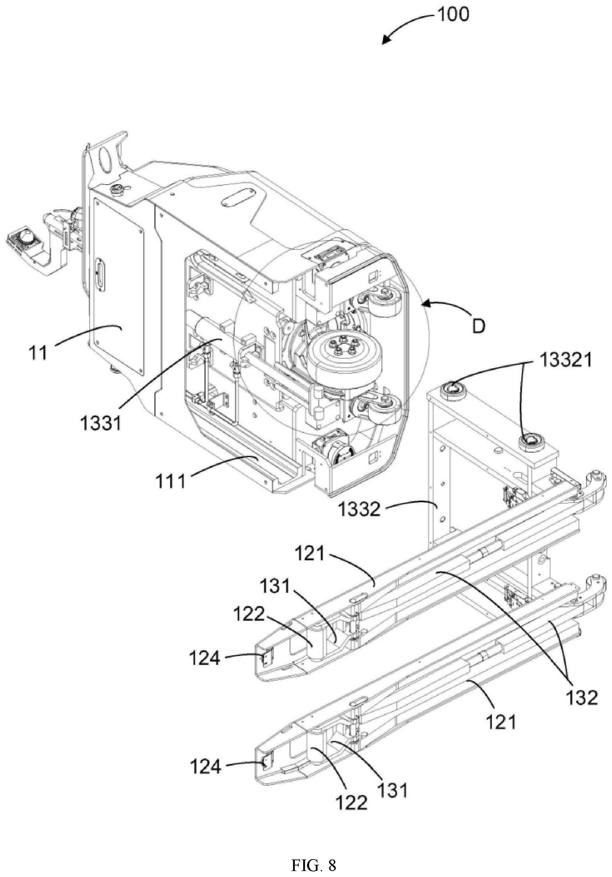

Referring to FIG. 2 and FIG. 8, in some embodiments, the sliding frame 1332 of the power assembly 133 of the drive mechanism 13 is a frame structure, with sliding wheels 13321 arranged on both sides of the sliding frame 1332, and the forklift body 11 has a movement space, and a chute 111 adapted to the sliding wheels 13321 is provided in the movement space. The sliding frame 1332 is accommodated within the movement space of the forklift body 11, and is cooperatively connected to the chute 111 through the sliding wheels 13321, to achieve the lifting and lowering of the sliding wheels 13321 within the movement space. Further, the cooperation of the sliding wheels 13321 and the chute 111 provides guidance for the movement of the sliding frame 1332, thereby ensuring the stability of the movement of the fork arm 121.

Continuing to refer to FIG. 5A and FIG. 6, in some embodiments, the transmission assembly 132 includes a drive arm 1321 and a transmission arm 1322. The length of the drive arm 1321 is adjustable, the drive arm 1321 is connected to the load wheel 122 and is configured to adapt the mounting position of the load wheel 122 by adjusting its own length and is configured drive the load wheel 122 to swing up or down. The transmission arm 1322 is arranged on the forklift body 11, is hinged to the drive arm 1321 and the power assembly 133, respectively, and is configured to transmit power to the drive arm 1321 when the power assembly 133 drives the fork arm 121 to ascend or descend relative to the forklift body 11, such that the drive arm 1321 drives the load wheel 122 to swing down or up.

It may be understood that, the transmission structure in this embodiment adopts a linkage rod assembly, the power transmitted by the power assembly 133 drives the swinging up or down of the mounting rack 131, so as to achieve the load wheel 122 retracting into or moving away from the fork arm 121, respectively. The power system design of this embodiment realizes the driving of the load wheel 122, and has the characteristics of high efficiency and simplicity. In addition, the drive arm 1321 of this embodiment may adjust its own length to adapt to the mounting position of the mounting rack 131, avoiding the need for cumbersome disassembly and replacement operations when the mounting position of the load wheel 122 changes, allowing the adjustment of the load wheel 122 and the transmission assembly 132 more flexible.

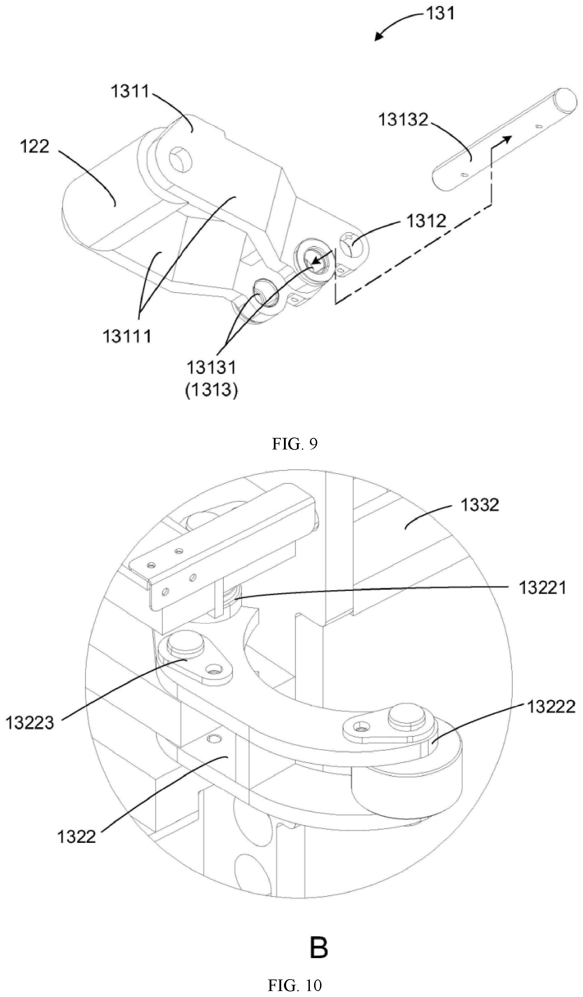

Referring to FIG. 3 and FIG. 9, the mounting rack 131 includes a swinging end 1311 and a movable end 1312 that are arranged opposite with each other, and a first hinge part 1313 provided between the swinging end 1311 and the movable end 1312, where the first hinge part 1313 is hinged to the fork arm 121, and the load wheel 122 is rotatably mounted on the swinging end 1311.

Continuing to refer to FIG. 5A and FIG. 6, the drive arm 1321 of the transmission assembly 132 includes a first hinge end 13214 and a second hinge end 13215 that are arranged opposite with each other, where the first hinge end 13214 is hinged to the movable end 1312

Referring to FIG. 5A, FIG. 6, and FIG. 10, the transmission arm 1322 of the transmission assembly 132 includes a third hinge end 13221 and a fixed end 13222 that are arranged opposite with each other, and a second hinge part 13223 provided between the third hinge end 13221 and the fixed end 13222, where the third hinge end 13221 is hinged to the sliding frame 1332, and the fixed end 13222 is hinged to the forklift body 11, and the second hinge part 13223 of the transmission arm 1322 is hinged to the second hinge end 13215 of the drive arm 1321.

When the third hinge end 13221 of the transmission arm 1322 follows the sliding frame 1332 to ascend, the drive arm 1321 drives the mounting rack 131 to swing downward, so as to drive the load wheel 122 to move away from the fork arm 121 to touch the ground; when the third hinge end 13221 of the transmission arm 1322 follows the sliding frame 1332 to descend, the drive arm 1321 drives the mounting rack 131 to swing upward, so as to drive the load wheel 122 to approach the fork arm 121 and move closer to the fork arm 121.

In this embodiment, the fixed end 13222 of the transmission arm 1322 is hinged to the bottom of the forklift body 11, and the third hinge end 13221 of the transmission arm 1322 is hinged to the bottom of the sliding frame 1332. When the drive mechanism 13 drives the sliding frame 1332 to ascend, the third hinge end 13221 of the transmission arm 1322 rotates with its own fixed end 13222 as a pivot, and at the same time, the second hinge part 13223 of the transmission arm 1322 is driven. The second hinge end 13215 of the drive arm 1321 follows the movement of the second hinge part 13223 of the transmission arm 1322 to swing, and the first hinge end 13214 of the drive arm 1321 pulls the movable end 1312 of the mounting rack 131, such that the swinging end 1311 of the mounting rack 131 to swing with its own first hinge part 1313 as a pivot, thereby causing the load wheel 122 to move downward away from the fork arm 121 to touch the ground.

Accordingly, when the drive mechanism 13 drives the sliding frame 1332 to descend, the third hinge end 13221 of the transmission arm 1322 rotates in a opposite direction with its own fixed end 13222 as the pivot, and at the same time, the second hinge part 13223 of the transmission arm 1322 is driven. The second hinge end 13215 of the drive arm 1321 follows the movement of the second hinge part 13223 of the transmission arm 1322 to swing, and the first hinge end 13214 of the drive arm 1321 pushes the movable end 1312 of the mounting rack 131, such that the swinging end 1311 of the mounting rack 131 swings with its own first hinge part 1313 as the pivot, thereby causing the load wheel 122 to be lifted up and to retract upward within the containing slot 12141 of the fork arm 121.

It may be understood that in this embodiment the drive mechanism 13 adopts a linkage rod assembly, when carrying goods, which achieves the load wheel 122 following the ascend of fork arm 121 to move away from the fork arm 121 at the same time, until the load wheel touches the ground, so as to support the forklift 100 and the goods, and when the fork arm 121 picks up the goods, the load wheel 122 follows the fork arm 121 to descend and retract upward within the bottom of the fork arm 121.

Continuing to refer to FIG. 5A and FIG. 6, in some embodiments, the drive arm 1321 includes a first connecting rod 13211, a threaded rod 13212, and a second connecting rod 13213 connected in sequence, an end of the first connecting rod 13211 away from the threaded rod 13212 is hinged to the load wheel 122, an end of the second connecting rod 13213 away from the threaded rod 13212 is hinged to the transmission arm 1322, and the threaded rod 13212 is threaded to at least one of the first connecting rod 13211 and the second connecting rod 13213. The end of the first connecting rod 13211 away from the threaded rod 13212 (the first hinge end 13214 of the drive arm 1321) is hinged to the movable end 1312 of the mounting rack 131, and the end of the second connecting rod 13213 away from the threaded rod 13212 (the second hinge end 13215 of the drive arm 1321) is hinged to the second hinge part 13223 of the transmission arm 1322.

It may be understood that, the drive arm 1321 in this embodiment includes the first connecting rod 13211, the second connecting rod 13213, and the threaded rod 13212, so as to achieve a detachable structure of the drive arm 1321, and the length of the drive arm 1321 can be adjusted by adjusting the connection length between the threaded rod 13212 and at least one of the first connecting rod 13211 or the second connecting rod 13213.

In other embodiments, as illustrated in FIG. 5B, the drive arm 1321 may include a third connecting rod 132101 and a fourth connecting rod 132102, where the third connecting rod 132101 is a hollow rod, and a wall surface of the third connecting rod 132101 is provided with a plurality of through holes 132104 arranged apart along the length direction of the third connecting rod 132101. The fourth connecting rod 132102 is partially accommodated in the third connecting rod 132101 and is slidingly connected to the third connecting rod 132101, a spring plunger 132103 is provided on an end of the fourth connecting rod 132102 accommodated in the third connecting rod 132101, and the spring plunger 132103 extends through one of the through holes 132104 of the third connecting rod 132101 and is exposed.

It may be understood that the third connecting rod 132101 and the fourth connecting rod 132102 are limited in their relative sliding by the cooperation between through hole 132104 and the spring plunger 132103. When the spring plunger 132103 is pressed, the third connecting rod 132101 and the fourth connecting rod 132102 resume relative sliding, at this time, by aligning and cooperatively connecting the spring plunger 132103 with another through hole 132104 and, the length of the drive arm 1321 may be adjusted.

Referring to FIG. 3 and FIG. 9, in some embodiments, the first hinge part 1313 of the mounting rack 131 includes a first hinge hole 13131 and a first hinge shaft 13132, where the first hinge hole 13131 is sleeved on the first hinge shaft 13132. The mounting part 123 on the fork arm 121 is a mounting hole 1231, one of the plurality of mounting holes 1231 is sleeved on the first hinge shaft 13132. In other words, the mounting part 123 on the fork arm 121 is a mounting hole 1231, one of the plurality of mounting holes 1231 is coupled to the load wheel 122, so as to adjust the mounting position of the load wheel 122 in the length direction of the fork arm 121, thereby enhancing the application range of the forklift 100.

It may be understood that the fork arm 121 in this embodiment is provided with a plurality of mounting holes 1231 for aligned connection to the first hinge hole 13131 of the mounting rack 131, and the mounting rack 131 may be aligned with one of the different mounting holes 1231 through the first hinge hole 13131, and complete the insertion fit through the first hinge shaft 13132 of the first hinge part 1313 of the mounting rack 131, so as to adjust the mounting position of the load wheel 122 in the length direction of the fork arm 121, thereby enhancing the application range of the forklift 100.

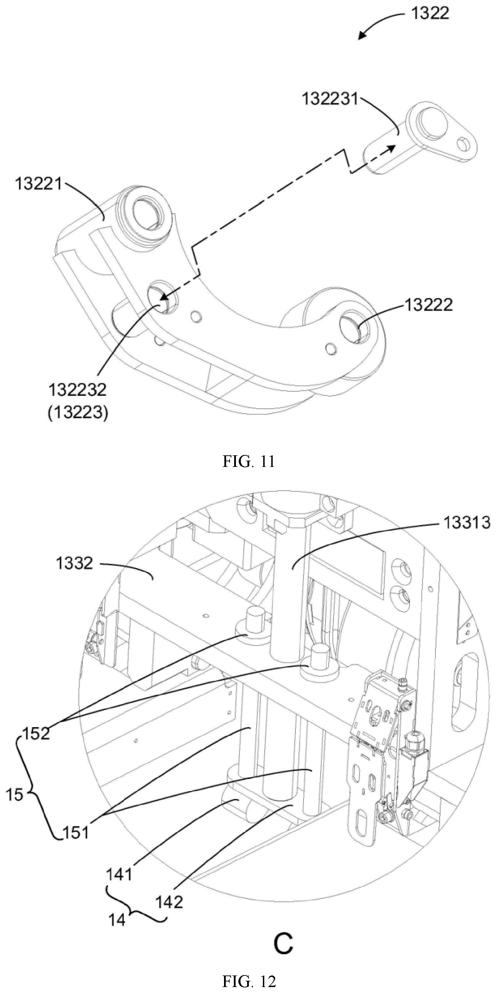

Referring to FIG. 11, in some embodiments, the second hinge part 13223 of the transmission arm 1322 includes a second hinge hole 132232 and a second hinge shaft 132231, the second hinge hole 132232 is sleeved on the second hinge shaft 132231, and the second hinge end 13215 of the drive arm 1321 is provided with a third hinge hole and is sleeved on the second hinge shaft 132231 of the second hinge part 13223 of the transmission arm 1322, so as to achieve the hinge connection between the transmission arm 1322 and the drive arm 1321.

Referring to FIG. 4, in some embodiments, the jacking device 1331 includes a cylinder 13311 and a first movable shaft 13312. The cylinder 13311 is fixedly connected to the forklift body 11. The first movable shaft 13312 is moveable relative to the cylinder 13311 in the height direction of the forklift body 11, an end of the first movable shaft 13312 is accommodated in the cylinder 13311, and another end of the first movable shaft 13312 is connected to the sliding frame 1332.

In this embodiment, a jacking device 1331 is provided, the jacking device 1331 may be a hydraulic cylinder or a stepper motor, e.g., the first movable shaft 13312 is driven in a hydraulic manner, such that the first movable shaft 13312 lifts the sliding frame 1332, thereby achieving the lifting and lowering of the sliding frame 1332. In other embodiments, a linear stepping motor may further be used to drive the lifting and lowering of the sliding frame 1332.

Referring to FIG. 4 and FIG. 12, in some embodiments, the forklift 100 further includes an auxiliary support mechanism 14, where the auxiliary support mechanism is movably arranged on the forklift body 11 and connected to the drive mechanism 13. The drive mechanism 13 is further configured to drive the auxiliary support mechanism 14 to move relative to the forklift body 11 in the height direction of the forklift body 11, and when driving the fork arm 121 to ascend relative to the forklift body 11, drive the auxiliary support mechanism 14 to ascend to be away from the ground, and when driving the fork arm 121 to descend relative to the forklift body 11, drive the auxiliary support mechanism 14 to descend to touch the ground.

It may be understood that, in this embodiment, an auxiliary support mechanism 14 is arranged to provide auxiliary support for the forklift 100 through the auxiliary support mechanism 14 when the fork arm 121 descends.

In some embodiments, the auxiliary support mechanism 14 includes an orientation wheel 141 and a mounting table 142. The mounting table 142 is below the sliding frame 1332 and is connected to the drive mechanism 13, the orientation wheel 141 is rotatably installed at the bottom of the mounting table 142, and the drive mechanism 13 is further configured to, when the sliding frame 1332 ascends, drive the mounting table 142 to ascend, such that the orientation wheel 141 moves away from the ground, and when the sliding frame 1332 descends, drive the mounting table 142 to descend, such that the orientation wheel 141 touches the ground.

It may be understood that when the sliding frame 1332 ascends, the drive mechanism 13 drives the mounting table 142 to ascend, such that the orientation wheel 141 is lifted; when the sliding frame 1332 descends, the drive mechanism 13 drives the mounting table 142 to descend, such that the orientation wheel 141 touches the ground, thereby providing auxiliary support for the fork arm 121, so as to increase the load capacity of the fork arm 121.

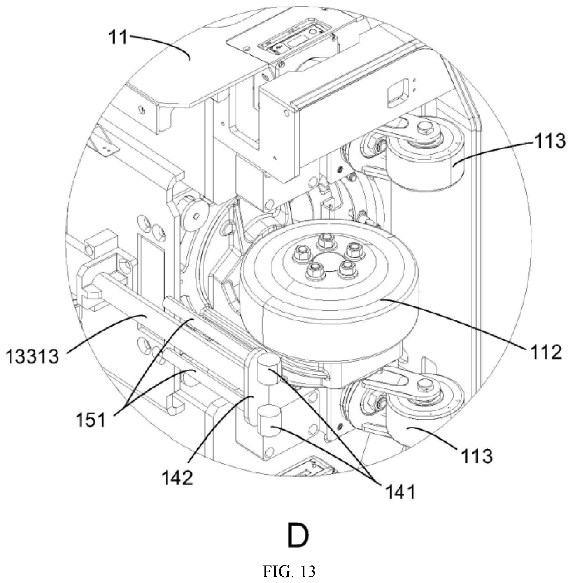

Referring to FIG. 13, in this embodiment, the forklift body 11 is further provided with a balance wheel 113 and a steering wheel 112, where the forklift 100 is supported and moved through the balance wheel 113 and the steering wheel 112. When the forklift 100 operates normally, the fork arm 121 is at a high position. When the fork arm 121 picks up a goods, the forklift 100 moves to the front of the pallet, the fork arm 121 is driven down to a low position by the jacking device 1331. At this time, the load wheel 122, driven by the transmission assembly 132, turns towards the fork arm 121 to move closer to the bottom of the fork arm 121. Then, the orientation wheel 141, the balance wheel 113, and steering wheel 112 all touch the ground to form a new support and maintain the balance of the forklift 100.

The forklift 100 moves towards the pallet, the fork arm 121 is inserted into the pallet hole, and when the forklift 100 is in place, the fork arm 121 is lifted to a high position by the jacking device 1331. At this time, the orientation wheel 141 moves away from the ground, and the load wheel 122, the steering wheel 112, and the balance wheel 113 all touch the ground to re-form the support system, and the goods are lifted off the ground. After the forklift 100 transports the goods to the destination, the fork arm 121 is driven to a low position by the jacking device 1331. At this time, the orientation wheel 141, the balance wheel 113, and the steering wheel 112 all touch the ground to form a new support, thereby maintaining the balance of the vehicle.

After the fork arm 121 is completely withdrawn from the pallet hole, under the action of the jacking device 1331, the fork arm 121 operates to a high position. At this time, the orientation wheel 141 moves away from the ground, and the load wheel 122, under the drive of the transmission assembly 132, turns away from the fork arm 121 to touch the ground, such that the load wheel 122, the steering wheel 112, and the balance wheel 113 re-support the forklift 100.

Referring to FIG. 4, FIG. 12, and FIG. 13, in some embodiments, the jacking device 1331 of the power assembly 133 further includes a second movable shaft 13313. The first movable shaft 13312 and the second movable shaft 13313 are coaxially arranged, and the first movable shaft 13312 and the second movable shaft 13313 are respectively on both sides of the jacking device 1331 (specifically, e.g., the cylinder 13311 of the jacking device 1331), and the second movable shaft 13313 is moveable relative to the cylinder 13311 in the height direction of the forklift body 11, an end of the second movable shaft 13313 is accommodated in the cylinder 13311, and another end of the second movable shaft 13313 is connected to the mounting table 142.

It may be understood that the jacking device 1331 further includes a second movable shaft 13313, and the forklift 100 drives the orientation wheel 141 to ascend and descend through the second movable shaft 13313 of the jacking device 1331. For example, the jacking device 1331 in this embodiment may be a double-acting double-rod hydraulic cylinder. With the above arrangement in this embodiment, a single power source is adopted to achieve the lifting or lowering action of the fork arm 121, the upward or downward swinging of the load wheel 122, and the lifting or lowering action of the orientation wheel 141, which is beneficial to reduce the design costs of the power system of the forklift 100, while ensuring the action synchronization among the fork arm 121, the load wheel 122, and the orientation wheel 141.

Continuing to refer to FIG. 12, in some embodiments, the forklift 100 further includes a guide mechanism 15, the guide mechanism 15 is connected to both the auxiliary support mechanism 14 and the forklift body 11, and is configured to guide the movement of the mounting table 142 in the height direction of the forklift body 11.

It may be understood that in order to prevent the orientation wheel 141 from deviating to make it difficult for the fork arm 121 to insert into the pallet hole, in this embodiment, a guidance component 15 is arranged, such that the mounting table 142 can only move up and down, and cannot rotate around the second movable shaft 13313 of the jacking device 1331, so as to avoid the orientation wheel 141 from deviating.

In some embodiments, the guidance component 15 includes at least one guide shaft 151, and a guide shaft sleeve 152 slidingly connected to the guide shaft 151, one end of the guide shaft 151 is fixedly connected to the mounting table 142, another end of the guide shaft 151 is inserted through the guide shaft sleeve 152, and the guide shaft 151 is arranged parallel to the second movable shaft 13313 of the jacking device 1331, and the guide shaft sleeve 152 is mounted on the sliding frame 1332.

It may be understood that, since the mounting table 142 is connected to the sliding frame 1332 through at least two parallel shafts, the second movable shaft 13313 of the jacking device 1331 as well as the mounting table 142 cannot rotate around the second movable shaft 13313 as an axis, and the mounting table 142 can only move in the height direction of the forklift body 11, thereby preventing the orientation wheel 141 from deviating.

For example, in this embodiment, two guide shafts 151 are provided, the second movable shaft 13313 of the jacking device 1331 is between the two guide shafts 151 of the guide mechanism 15, and the guide shaft sleeves 152 are mounted on the lower edge frame of the sliding frame 1332. In other embodiments, the guide shaft 151 may be a smoothness shaft with a polygonal or oval cross-section.

In some embodiments, the load wheel 122 is a unidirectional wheel or an omnidirectional wheel. It may be understood that, in this embodiment, the load wheel 122 adopting a unidirectional wheel may meet simple handling scenarios, and the load wheel 122 adopting an omnidirectional wheel may meet the omnidirectional movement needs of the forklift 100, and may better avoid obstacles and stack goods in the load handling scenario. In some embodiments, the omnidirectional wheel may be a differential wheel 1221, a spherical wheel, a Mecanum wheel, etc.

Referring to FIG. 9, for example, when the load wheel 122 is a unidirectional wheel, the swinging end 1311 of the mounting rack 131 adopts a U-shaped fork structure, one fork arm 121 is taken as an example, and each fork part 13111 of the U-shaped fork is provided with a through hole. The load wheel 122 is between two fork parts 13111 of the U-shaped fork, and the load wheel 122 is provided with a shaft at its axis core and rotatably connected to the U-shaped fork by the cooperation between the shaft and the through hole.

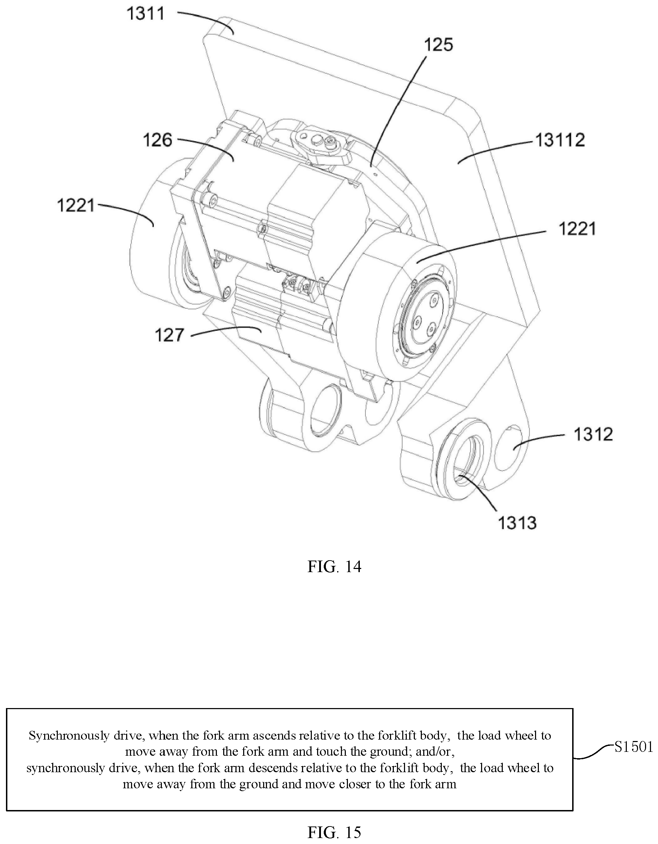

Referring to FIG. 14, for example, when the load wheel 122 is a differential wheel 1221, the swinging end 1311 of the mounting rack 131 adopts a structure of a platform 13112, one fork arm 121 is taken as an example, and the differential wheels 1221 are paired and arranged apart below the platform 13112. The bottom of the platform 13112 is connected with a base 125, and the base 125 is mounted with a first motor 126 and a second motor 127, and each motor drives one of the differential wheels 1221 below the platform 13112. When the forklift 100 needs to turn, the two motors drive the corresponding differential wheels 1221 at different rotation speeds to create a speed difference between the two differential wheels 1221, thereby achieving the steering of the forklift 100.

Referring to FIG. 1, in some embodiments, the top of the forklift body 11 is provided with a 3D laser radar 19, and the 3D laser radar 19 is configured to monitor a terrain and an object of the surrounding environment.

It may be understood that in this embodiment, a 3D laser radar 19 is arranged, through which the terrain and objects in the surrounding environment are monitored, so as to achieve positioning of the forklift 100. The 3D laser radar 19 is electrically connected to the controller of the forklift 100, and the controller receives the monitoring information sent by the 3D laser radar 19, and controls the forklift power system (such as the drive mechanism 13) to perform corresponding actions according to the monitoring information. Further, when the forklift 100 is an unmanned electric forklift, the monitoring information generated by the 3D laser radar 19 may be used to plan the movement path of the forklift 100 and adjust the movement statuses of the load wheel 122, the orientation wheel 141, and the fork arm 121. For example, the 3D laser radar 19 uses the acquired 3D point cloud data to sense whether there is goods or pallet at the forklift workstation, and may determine the orientation and distance of the goods, and the controller of the forklift 100 automatically adjusts the travel path and the actions of the fork arm 121, the load wheel 122, and the orientation wheel 141 according to the sensing results.

In some embodiments, the environmental area sensed by the 3D laser radar 19 includes obstacles at the top, front, and sides of the forklift 100, which may achieve multi-directional obstacle avoidance, at the same time avoid arranging other obstacle avoidance sensors at the top of the forklift, and reduce the number of obstacle avoidance sensors arranged at the bottom of the vehicle and used to achieve protection in front of and on the sides of the forklift 100, thereby effectively simplifying the overall structure of the forklift 100 and reducing the design costs of the forklift 100.

For example, the 3D laser radar 19 detects the road conditions of the forward and backward travel paths of the forklift 100, and when abnormal road conditions are detected (i.e., when the point cloud data of obstacles is not obtained), the forklift 100 performs an emergency stop to avoid the risk of the forklift 100 falling during the docking task with the lifting machine or working on the outdoor platform. In addition, in this embodiment, the 3D laser radar 19 used by the forklift 100 may monitor the distance between the forklift 100 and a suspended place in real-time, and limit the travel distance of the forklift 100 according to the monitoring results to ensure that the forklift 100 does not approach the edge of the suspended place during travel, thereby preventing the occurrence of falling accidents.

It may be seen that the forklift 100 in this embodiment achieves positioning, sensing, obstacle avoidance, and other functions through a single 3D laser radar 19, simplifying the structure of the forklift 100 and reducing the design costs of the forklift 100.

Continuing to refer to FIG. 1, in some embodiments, the forklift 100 further includes a cantilever 17 and an upright column 18. The cantilever 17 includes a suspension end 171 and a second connecting end 172, where the suspension end 171 is above the forklift body 11, and the 3D laser radar 19 is mounted on the suspension end 171. The upright column 18 includes a third connecting end 181 and a fourth connecting end 182, the third connecting end 181 is connected to the top of the forklift body 11, and the fourth connecting end 182 of the upright column 18 is connected to the second connecting end 172 of the cantilever 17.

The upright column 18 and the cantilever 17 are combined to form a bracket that supports the 3D laser radar 19, placing the 3D laser radar 19 at a higher position to avoid being blocked by the forklift 100, goods, etc., thereby obtaining a wider detection range. For example, the upright column 18 and the cantilever 17 may be fixedly connected or rotatably connected, which is not limited here.

In this embodiment, with such arrangement, the 3D laser radar 19 is suspended above the forklift body 11, such that it is less likely for the detection laser to be blocked by the forklift body 11 and goods, thereby avoiding the loss of point cloud data in some areas during the detection process. In addition, in some embodiments, the cantilever 17 is an arch-shaped cantilever, and the arch-shaped cantilever 17 not only provides a suitable height for the 3D laser radar 19 but also provides a better overview angle, allowing the detection range of the 3D laser radar 19 to be wider.

In other embodiments, the 3D laser radar 19 is provided with a connecting shaft, and the suspension end 171 of the cantilever 17 is provided with a containing cavity, where at least one side wall of the containing cavity has a connecting hole fitted with the connecting shaft. The 3D laser radar 19 is accommodated in the containing cavity and is rotatable through the cooperation between the connecting shaft and the connecting hole, thereby achieving adjustable detection direction and a wider detection range.

Referring to FIG. 8, in some embodiments, an end of the fork arm 121 away from the forklift body 11 is provided with a first obstacle avoidance sensor 124. The first obstacle sensor 124 may be a 2D laser radar, which is configured to monitor obstacles in front of the fork arm 121.

It may be understood that, in this embodiment, a first obstacle avoidance sensor 124 is provided on the fork arm 121 to monitor obstacles in front of the fork arm 121, which is beneficial for urgently stopping the forklift 100 when an obstacle is detected, so as to avoid collisions and further improve the safety protection capability of the forklift 100. The first obstacle avoidance sensor 124 is electrically connected to the controller of the forklift 100, and the controller receives the monitoring information sent by the first obstacle avoidance sensor 124 and controls the forklift power system to perform corresponding actions according to the monitoring information. For example, the first obstacle avoidance sensor 124 in this embodiment may also use photoelectric sensors, ultrasonic sensors, etc.

Referring to FIG. 1 and FIG. 7, in some embodiments, at least two second obstacle avoidance sensors 16 are circumferentially provided at the bottom of the forklift body 11, the second obstacle avoidance sensor may be a 2D laser radar, and the second obstacle avoidance sensors 16 are configured to monitor obstacles around the bottom of the forklift body.

It may be understood that, although the top of the forklift body 11 is provided with a 3D laser radar 19, and the front end of the fork arm 121 is provided with a first obstacle avoidance sensor 124, there are still some dead angles at the bottom of the forklift body 11 that cannot be monitored by the 3D laser radar 19 and the first obstacle avoidance sensor 124. Therefore, in this embodiment, the second obstacle avoidance sensors 16 are circumferentially arranged at the bottom of the forklift body 11, so as to monitor obstacles around the bottom of the forklift body 11, thereby further improving the safety protection capability of the forklift 100. The second obstacle avoidance sensor 16 is electrically connected to the controller of the forklift 100, and the controller receives the monitoring information sent by the second obstacle avoidance sensor 16 and controls the forklift power system to perform corresponding actions according to the monitoring information. For example, in this embodiment, second obstacle avoidance sensors 16 are arranged at two sides of bottom of the forklift body 11 in the length direction (the same as the length direction of the fork arm 121).

Embodiments of the present disclosure further provides a method for controlling a forklift, applied to a forklift including a forklift body 11, one or more fork arms 121, and one or more load wheels 122, where each fork arm 121 among the one or more fork arms 121 is movably arranged on the forklift body 11, and each load wheel 122 among the one or more load wheel is rotatably arranged below a corresponding fork arm 121, as illustrated in FIG. 15, the method includes:

at step 1501, when the fork arm 121 ascends relative to the forklift body 11, synchronously driving the load wheel 122 to move away from the fork arm 121 to touch the ground; and/or, when the fork arm 121 descends relative to the forklift body 11, synchronously driving the load wheel 122 to move away from the ground and move closer to the fork arm 121.

In some embodiments, the method further includes: after the load wheel 122 retracts into the fork arm 121, controlling the fork arm 121 to insert into a pallet hole; after the fork arm 121 is inserted into the pallet hole, controlling the fork arm to ascend relative to the forklift body, and synchronously driving the load wheel 122 to move away from the fork arm 121 to touch the ground, such that the load wheel 122 provides support for the forklift body 11 and goods on the pallet.

In some embodiments, the method further includes: when the fork arm 121 is withdrawn from the pallet hole of the pallet, controlling the fork arm 121 to descend relative to the forklift body 11, and synchronously driving the load wheel 122 to move away from the ground and move closer to the fork arm 121; and
after the fork arm 121 is completely withdrawn from the pallet hole, controlling the fork arm 121 to ascend relative to the forklift body 11, and synchronously driving the load wheel 122 to move away from the fork arm 121 to touch the ground, such that the load wheel 122 supports movement of the fork arm 121.

In some embodiments, the forklift further includes an auxiliary support mechanism 14, and the method further includes: when the fork arm 121 descends relative to the forklift body 11, synchronously driving the load wheel 122 to move away from the ground and move closer to the fork arm 121, where the auxiliary support mechanism 14 is configured to touch the ground to provide auxiliary support for the forklift.

In some embodiments, a top of the forklift body 11 is provided with a 3D laser radar 19, and the method further includes: according to the 3D point cloud data collected by the 3D laser radar 19, controlling the forklift to perform at least one of the following operations: positioning the forklift, controlling the forklift to bypass obstacles, or controlling a travel path of the forklift.

In some embodiments, the end of the fork arm 121 away from the forklift body 11 is provided with a first obstacle avoidance sensor 124, and the method further includes: controlling, according to the monitoring information collected by the first obstacle avoidance sensor 124, the power system of the forklift to perform corresponding actions; and/or second obstacle avoidance sensors 16 are circumferentially arranged at the bottom of the forklift body 11, and the method further includes: controlling, according to the monitoring information collected by the second obstacle avoidance sensor 16, the power system of the forklift to perform corresponding actions.

In some embodiments, a mounting position of the load wheel 11 in a length direction of the fork arm 121 is adjusted, such that after the fork arm 121 is inserted into the pallet hole of the pallet, the load wheel 122 is exposed outside the pallet hole.

In some embodiments, the one or more fork arms 121 include two fork arms 121, and the method further includes: adjusting a distance between the two fork arms, such that the distance between the two fork arms adapts to a width of the pallet.

The forklift and the method of controlling the forklift provided by embodiments of the present disclosure belong to the same inventive concept, and the description of related details and beneficial effects may be referred to each other and not to be repeated again.

Finally, it should be noted that the above embodiments are merely intended to illustrate the technical solutions of the present disclosure rather than to limit the present disclosure. Under the idea of the present disclosure, the technical features in the above embodiments or different embodiments may also be combined, the steps may be implemented in any order, and there are many other changes in different aspects of the present disclosure as described above, which are not provided in details for the sake of conciseness. Although the present disclosure is described in detail with reference to the aforesaid embodiments, those of ordinary skill in the art should understand that, modifications may still be made to the technical solutions contained in the above embodiments, or equivalent substitutions may still be made to some technical features therein; and these modifications or substitutions will not cause the nature of the corresponding technical solutions to depart from the spirit and scope of the technical solutions of respective embodiments of the present disclosure.

## Claims

1. A forklift, comprising:
a forklift body;
one or more fork arms, each of the one or more fork arms is movably arranged on the forklift body;
one or more load wheels, each of the one or more load wheels is rotatably arranged below a corresponding fork arm among the one or more fork arms; and
a drive mechanism, connected to the one or more fork arms and the one or more load wheels, respectively, and configured to: when driving the fork arm to ascend relative to the forklift body, synchronously drive the load wheel to move away from the fork arm, such that the load wheel touches a ground, and/or, when driving the fork arm to descend relative to the forklift body, synchronously drive the load wheel to move closer to the fork arm.

2. The forklift according to claim 1, wherein a mounting position of the load wheel is adjustable relative to the fork arm in a length direction of the fork arm.

3. The forklift according to claim 1 or 2, wherein a plurality of mounting parts are provided along a length direction of the fork arm, and the load wheel is fittingly connected to one of the plurality of mounting parts.

4. The forklift according to any one of claims 1 to 3, wherein the drive mechanism comprises:
a transmission assembly, connected to the load wheel; and
a power assembly, connected to the fork arm and the transmission assembly, respectively, and configured to: when driving the fork arm to ascend relative to the forklift body, drive the load wheel to swing downward by driving the transmission assembly, such that the load wheel moves away from the fork arm until the load wheel touches the ground, and/or, when driving the fork arm to descend relative to the forklift body, drive the load wheel to swing upward by driving the transmission assembly, such that the load wheel retracts into the fork arm.

5. The forklift according to claim 4, wherein the transmission assembly comprises:
a drive arm, adjustable in length and connected to the load wheel, configured to: adapt to a mounting position of the load wheel by adjusting a length of the drive arm, and drive the load wheel to swing upward or downward; and
a transmission arm, arranged on the forklift body and hinged to the drive arm and the power assembly, configured to: transmit power to the drive arm when the power assembly drives the fork arm to ascend or descend relative to the forklift body, such that the drive arm drives the load wheel to swing downward or upward.

6. The forklift according to claim 5, wherein the drive arm comprises: a first connecting rod, a threaded rod, and a second connecting rod connected in sequence,
wherein, an end of the first connecting rod away from the threaded rod is hinged to the load wheel,
an end of the second connecting rod away from the threaded rod is hinged to the transmission arm, and
the threaded rod is threadedly connected to at least one of the first connecting rod or the second connecting rod.

7. The forklift according to any one of claims 1 to 6, further comprising an auxiliary support mechanism, wherein the auxiliary support mechanism is movably arranged on the forklift body and is connected to the drive mechanism; and
the drive mechanism is further configured to: when driving the fork arm to ascend relative to the forklift body, drive the auxiliary support mechanism to ascend to be away from the ground, and when driving the fork arm to descend relative to the forklift body, drive the auxiliary support mechanism to descend to touch the ground.

8. The forklift according to claim 7, further comprising a guide mechanism, the guide mechanism is connected to both the auxiliary support mechanism and the forklift body and is configured to guide the auxiliary support mechanism to move relatively to the forklift body in a height direction of the forklift body.

9. The forklift according to any one of claims 1 to 8, wherein quantities of the one or more fork arms and the one or more load wheels are both two, the two fork arms are arranged apart on the forklift body, the two load wheels are respectively in one-to-one correspondence with the two fork arms, and
the drive mechanism is connected to each of the one or more fork arms and each of the one or more load wheels respectively, and the drive mechanism is capable of driving each of the one or more fork arms and each of the one or more load wheels to move synchronously.

10. The forklift according to any one of claims 1 to 9, wherein a top of the forklift body is provided with a 3D laser radar, and the 3D laser radar is configured to monitor a terrain and an object of a surrounding environment; and/or
the forklift further comprises a first obstacle avoidance sensor, and the first obstacle avoidance sensor is arranged on an end of the fork arm away from the forklift body and is configured to monitor an obstacle in front of the fork arm; and/or
the forklift further comprises second obstacle avoidance sensors, and the second obstacle avoidance sensors are circumferentially arranged at a bottom of the forklift body and are configured to monitor an obstacle around the bottom of the forklift body.

11. The forklift according to any one of claims 1 to 10, wherein
the one or more fork arms comprise a first fork arm and a second fork arm, the first fork arm and the second fork arm are arranged apart, and a distance between the first fork arm and the second fork arm is adjustable; and
the one or more load wheels comprise: a first load wheel corresponding to the first fork arm, and a second load wheel corresponding to the second fork arm.

12. The forklift according to any one of claims 1 to 11, wherein the load wheel is an omnidirectional wheel or a unidirectional wheel.

13. A method of controlling a forklift, applied to a forklift comprising a forklift body, one or more fork arms, and one or more load wheels, wherein each of the one or more fork arms is movably arranged on the forklift body, each of the one or more load wheels is rotatably arranged below a corresponding fork arm among the one or more fork arms, and the method comprises:
when driving the fork arm to ascend relative to the forklift body, synchronously driving the load wheel to move away from the fork arm to touch a ground; and/or,
when driving the fork arm to descend relative to the forklift body, synchronously driving the load wheel to move away from the ground and move closer to the fork arm.

14. The method according to claim 13, further comprising:
controlling, after the load wheel is retracted into the fork arm, the fork arm to be inserted into a pallet hole of a pallet; and
controlling, after the fork arm is inserted into the pallet hole, the fork arm to ascend relative to the forklift body, and synchronously driving the load wheel to move away from the fork arm to touch the ground, such that the load wheel provides support for the forklift body and goods on the pallet.

15. The method according to claim 13 or 14, further comprising:
controlling, when the fork arm is withdrawn from a pallet hole of the pallet, the fork arm to descend relative to the forklift body, and synchronously driving the load wheel to move away from the ground and move closer to the fork arm; and
controlling, after the fork arm is completely withdrawn from the pallet hole, the fork arm to ascend relative to the forklift body, and synchronously driving the load wheel to move away from the fork arm to touch the ground, such that the load wheel supports movement of the fork arm.

16. The method according to any one of claims 13 to 15, the forklift further comprises an auxiliary support mechanism, and the method further comprises:
synchronously driving, when the fork arm descends relative to the forklift body, the load wheel to move away from the ground and move closer to the fork arm, wherein the auxiliary support mechanism is configured to touch the ground to provide auxiliary support for the forklift.

17. The forklift according to any one of claims 13 to 16, wherein a top of the forklift body is provided with a 3D laser radar, and the method further comprises:
controlling the forklift to perform at least one of the following operations according to 3D point cloud data collected by the 3D laser radar:
positioning the forklift,
controlling the forklift to perform obstacle avoidance, or
controlling a travel path of the forklift.

18. The forklift according to any one of claims 13 to 17, wherein
a first obstacle avoidance sensor is arranged on an end of the fork arm away from the forklift body, and the method further comprises:
controlling a power system of the forklift to perform a corresponding action according to monitoring information collected by the first obstacle avoidance sensor; and/or
second obstacle avoidance sensors are circumferentially arranged at a bottom of the forklift body, and the method further comprises:
controlling the power system of the forklift to perform a corresponding action according to monitoring information collected by the second obstacle avoidance sensors.

19. The method according to any one of claims 13 to 18, further comprising:
adjusting a mounting position of the load wheel in a length direction of the fork arm, such that after the fork arm is inserted into a pallet hole of a pallet, the load wheel is exposed outside the pallet hole.

20. The method according to any one of claims 13 to 19, wherein the one or more fork arms comprise two form arms, and the method further comprises:
adjusting a distance between the two fork arms, such that a distance between the two fork arms adapts to a width of the pallet.
